# EUROPÄISCHE PATENTSCHRIFT

(11) **EP 3 031 313 B1**
(45) Veröffentlichungstag und Bekanntmachung des Hinweises auf die Patenterteilung: **18.04.2018**
(21) Anmeldenummer: 15003530.1
(22) Anmeldetag: 11.12.2015
(51) Int. Cl.: A01D 33/06, A01G 1/02, A01D 43/08

(54) **VORRICHTUNG ZUM ABSCHNEIDEN VON SPARGELKRAUT**
DEVICE FOR CUTTING OFF ASPARAGUS TOPS
DISPOSITIF DE SEPARATION DE FANES

(30) Priorität: 12.12.2014 DE 202014009786 U
(43) Veröffentlichungstag der Anmeldung: 15.06.2016
(73) Patentinhaber: Hermeler, Thomas, 48336 Sassenberg-Füchtorf (DE)
(72) Erfinder: Hermeler, Thomas, 48336 Sassenberg-Füchtorf (DE)
(74) Vertreter: Witzany, Manfred

(56) Entgegenhaltungen:
- DE-A1- 2 549 482
- DE-A1- 3 245 744
- DE-A1- 19 906 944
- DE-C- 638 232
- DE-C- 707 043
- US-A- 1 347 733
- US-A- 3 716 974

## Beschreibung

Die Erfindung betrifft eine Vorrichtung zum Abschneiden von Spargelkraut in einem Damm. Die Vorrichtung ist dabei längs zum Damm bewegbar und weist mindestens ein in den Damm eindringendes Messer auf.

Aus der DE-A1-199 06 944 ist eine Vorrichtung zum Abschneiden von Spargelkraut in einem Damm bekannt. Diese Vorrichtung ist in einer Fahrtrichtung längs zum Damm bewegbar, wobei ein in den Damm eindringendes Messer das Spargelkraut abschneidet. Diesem Messer ist ein Krautzieher nachgeordnet, der das Spargelkraut aus dem Damm zieht. Diese Vorrichtung hat sich bewährt und bildet den gattungsgemäßen Ausgangspunkt der vorliegenden Erfindung.

Der Erfindung liegt die Aufgabe zugrunde, eine Vorrichtung der eingangs genannten Art zu schaffen, die ein exakteres Abschneiden des Spargelkrautes ermöglicht.

Diese Aufgabe wird erfindungsgemäß mit den folgenden Merkmalen gelöst.

Eine erfindungsgemäße Vorrichtung dient zum Abschneiden von Spargelkraut in einem Damm. Dabei wird die Vorrichtung in einer Fahrtrichtung längs zum Damm bewegt, um die einzelnen, im Damm befindlichen Spargelpflanzen nacheinander vom Spargelkraut zu befreien. Hierzu weist die Vorrichtung mindestens ein in den Damm eindringendes Messer auf, welches das Spargelkraut unterhalb der Dammkrone abschneidet. Dies stellt sicher, dass der Stängel des Spargelkrauts zur Vermeidung von Rost- und Fäulnisbildung entfernt wird. Um eine saubere Schnittführung zu gewährleisten, muss insbesondere verhindert werden, dass das Spargelkraut dem Messer ausweicht. Hierzu ist mindestens ein Halter vorgesehen, der dem mindestens einen Messer vorgeordnet ist. Auf diese Weise wird erreicht, dass das Spargelkraut bereits zuverlässig gehalten wird, bevor das mindestens eine Messer zur Schneidwirkung kommt. Der Halter ist dabei derart ausgebildet, dass er das Spargelkraut zwar hält und führt, sowie gegebenenfalls auch umbiegt, es wird jedoch vermieden, auf das Spargelkraut durch den Halter Zugkräfte auszuüben, die die Spargelpflanze schädigen könnten. Zu diesem Zweck ist ein zusätzlicher Krautzieher vorgesehen, der dem mindestens einen Messer nachgeordnet ist. Dadurch ist gewährleistet, dass der mindestens eine Krautzieher erst nach dem vollständigen Abtrennen des Spargelkrauts an diesem zieht und auf diese Weise aus dem Damm herausbefördert. Damit wird die Haltefunktion von der Ziehfunktion getrennt. Dies erlaubt, den mindestens einen Halter nahezu beliebig zu positionieren. Es muss lediglich sichergestellt werden, dass der mindestens eine Halter dem mindestens einen Messer vorgeordnet ist. Wie weit der mindestens eine Halter dem mindestens einen Messer vorgeordnet ist, spielt dabei nur eine untergeordnete Rolle, da der mindestens eine Halter keine Zugkräfte auf das Spargelkraut ausübt. Der mindestens eine Krautschneider ist dagegen dem mindestens einen Messer nachgeordnet, so dass keine Gefahr besteht, dass der mindestens eine Krauszieher am noch nicht vollständig abgeschnittenen Spargelkraut zieht. Die genaue Position des mindestens einen Krautziehers spielt damit nur eine untergeordnete Rolle. Damit ist eine exakte Positionierung des mindestens einen Halters bzw. des mindestens einen Krautschneiders relativ zum mindestens einen Messer nicht mehr erforderlich, so dass die Vorrichtung auch unter ungünstigen Betriebsbedingungen, wie beispielsweise bei eingelagerten Steinen innerhalb des Dammes problemlos und exakt arbeiten wird.

Alternativ oder zusätzlich kann der mindestens eine Halter fest mit dem mindestens einen Messer verbunden werden. Auf diese Weise ergibt sich eine feste und damit absolut reproduzierbare geometrische Zuordnung zwischen dem mindestens einen Halter und dem mindestens einen Messer. Eine Einstellung beider Teile zueinander kann somit prinzipiell entfallen. In diesem Fall kann die Funktion des Halters auch vom Krautzieher übernommen werden, ohne dass dabei die Gefahr besteht, dass das Spargelkraut zu spät gehalten oder zu früh gezogen wird. Es ist aber auch daran gedacht, einen zusätzlichen Krautzieher vorzusehen.

Nachdem die Vorrichtung längs des Dammes beweglich ist, ist es zweckmäßig, auch den mindestens einen Halter bzw. den mindestens einen Krautzieher relativ zur Vorrichtung beweglich auszubilden. Dadurch kann das Spargelkraut gut stabilisiert bzw. mit der nötigen Zugkraft aus dem Damm entfernt werden. Für den mindestens einen Halter bzw. den mindestens einen Krautzieher sind verschiedene Realisierungsformen denkbar. Beispielsweise könnten rotierende Trommeln, Ketten oder Bänder eingesetzt werden, um das Spargelkraut zu erfassen. Diese Aufzählung ist jedoch nicht abschließend zu verstehen. Der mindestens eine Halter kann mit der Fahrgeschwindigkeit der Vorrichtung synchronisiert sein, um Zugkräfte zu minimieren.

Um zu verhindern, dass der mindestens eine Halter das Spargelkraut bereits vor dem Abschneiden durch das mindestens eine Messer herauszieht, ist es vorteilhaft, wenn der mindestens eine Halter das Spargelkraut derart locker erfasst, dass es relativ zum mindestens einen Halter bewegbar ist. Damit spielt die relative Geschwindigkeit des mindestens einen Halters zum Damm keine entscheidende Rolle.

Um das Spargelkraut leicht weiterbearbeiten zu können, ist es zweckmäßig, wenn es der mindestens eine Halter umbiegt. Dadurch kommt das Spargelkraut in eine definierte Lage, in der es von folgenden Bearbeitungsstationen leicht aufgenommen werden kann, ohne sich zu verkeilen.

Es hat sich herausgestellt, dass Verstopfungen durch das Spargelkraut am leichtesten vermieden werden, wenn das abgeschnittene Spargelkraut mit der Spitze nach hinten, also entgegen der Fahrtrichtung umgebogen wird. Dies kann im einfachsten Fall durch den Halter realisiert werden.

Da der mindestens eine Krautzieher eine zum Teil beträchtliche Zugkraft auf das Spargelkraut ausüben muss, ist es zweckmäßig, diesen derart auszubilden, dass er das Spargelkraut im Klemmgriff erfasst. Dies kann beispielsweise durch zwei zusammengeführte Ketten oder Bänder geschehen.

Grundsätzlich kann der mindestens eine Krautzieher das Spargelkraut horizontal aus dem Damm herausziehen. Hierbei muss allerdings ein beträchtlicher Widerstand durch das umgebende Dammmaterial überwunden werden. Alternativ könnte der mindestens eine Krautzieher das Spargelkraut auch in vertikaler Richtung aus dem Damm herausziehen, so dass das Dammmaterial nahezu keinen Widerstand leistet. Dies ist aber aufgrund der in Fahrtrichtung sich fortbewegenden Vorrichtung relativ schwierig zu realisieren. Aus diesem Grund wird eine spitzwinkelig zur Fahrtrichtung gerichtete Zugkraft bevorzugt. Dabei ist eine Kraftkomponente des Krautziehers nach oben gerichtet. Bezüglich der horizontalen Kraftkomponente ist es grundsätzlich denkbar, diese in oder gegen Fahrtrichtung zu orientieren. Vorzugsweise ist der Anstellwinkel der Zugkraft des Krautziehers zur Fahrtrichtung mindestens 30°, so dass leichte, sandige Böden keinen merkbaren Widerstand mehr leisten. Bei schweren Böden ist dagegen ein Anstellwinkel von mindestens 45° günstiger.

Grundsätzlich kann das mindestens eine Messer in der Art eines Balkenmähers realisiert werden. Besser ist es jedoch, wenn es von mindestens zwei rotierend angetriebenen Kreismessern gebildet ist. Diese Kreismesser sind wesentlich unempfindlicher gegenüber Sand und Steinen innerhalb des Dammes. Damit kann das mindestens eine Messer mit langer Standzeit betrieben werden. Nachteilig an den Kreismessern ist jedoch der recht undefinierte Schnittpunkt, bei dem das Spargelkraut tatsächlich abgeschnitten wird. Dies kann durch die Aufteilung von Halte- und Ziehfunktion der Vorrichtung jedoch relativ leicht gelöst werden.

Um eine höhere Schnittwirkung zu erzielen, ist es vorteilhaft, wenn mindestens eines der Kreismesser gezahnt ist.

Nachdem die Kreismesser ohnehin zur Drehung angetrieben sein müssen, kann in relativ einfacher Weise an den Kreismessern oberseitig jeweils eine Trommel vorgesehen sein, die drehfest mit dem jeweiligen Kreismesser verbunden ist. Auf diese Weise lässt sich relativ einfach und ohne zusätzlichen Antrieb der mindestens eine Halter und/oder der mindestens eine Krautzieher bilden. Dies erfordert insbesondere einen sehr geringen mechanischen Aufwand.

In der Regel wird das Spargelkraut als solches nicht benötigt. Daher ist es vorteilhaft, wenn das abgeschnittene Spargelkraut mindestens einem dem mindestens einen Messer nachgeordneten Häcksler zugeführt wird. Dieser zerkleinert das Spargelkraut zu einer Größe, die zur Gründüngung oder Kompostierung geeignet ist.

Dem mindestens einen Häcksler ist vorzugsweise mindestens ein Auffangkorb und/oder mindestens ein Mulcher nachgeordnet. Durch den mindestens einen Auffangkorb kann das klein gehäckselte Spargelkraut gesammelt werden, um es später beispielsweise zu kompostieren. Alternativ kann das klein gehäckselte Spargelkraut auch auf den Damm aufgebracht werden, um auf diese Weise eine Gründüngung zu realisieren.

Der Erfindungsgegenstand wird beispielhaft anhand der Zeichnung erläutert, ohne den Schutzumfang zu beschränken.

Es zeigt:
- Figur 1: eine räumliche Prinzipdarstellung einer ersten Ausführungsform einer Vorrichtung zum Abschneiden von Spargelkraut und
- Figur 2: eine räumliche Prinzipdarstellung einer zweiten Ausführungsform einer Vorrichtung zum Abschneiden von Spargelkraut.

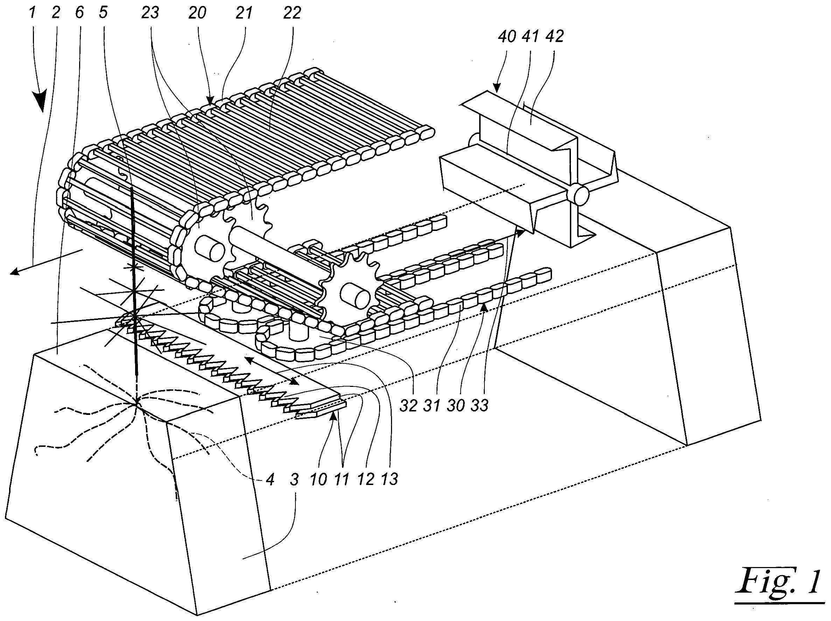

Die Figur 1 zeigt eine Vorrichtung 1 zum Abschneiden von Spargelkraut 5 in Prinzipdarstellung. Dabei wurde von der Darstellung aller Komponenten der Vorrichtung, die zum Verständnis des Erfindungsgegenstandes nicht erforderlich sind, zugunsten einer besseren Sichtbarkeit der relevanten Komponenten abgesehen. Insbesondere sind keinerlei Gehäuse, Antriebe, Lagerungen sowie Anbaustellen zur Verbindung mit einem Zugfahrzeug oder Räder dargestellt. Es versteht sich von selbst, dass diese Komponenten grundsätzlich vorhanden sein werden. Die Vorrichtung 1 kann sowohl als Anbauteil an ein Zugfahrzeug, insbesondere einen Ackerschlepper, als Anhänger für ein entsprechendes Zugfahrzeug oder als selbstfahrendes Fahrzeug ausgebildet sein. Dies spielt für die Realisierung des Erfindungsgegenstandes keine Rolle. Wichtig ist lediglich, dass die Vorrichtung 1 in einer Fahrtrichtung 2 bewegbar ist. Die Fahrtrichtung 2 wird in der Regel so gewählt, dass sie längs zu einem Damm 3 ausgerichtet ist, der lediglich angedeutet ist. Im Damm 3 sind Spargelpflanzen 4 eingepflanzt, deren Spargelkraut 5 oberseitig über eine Dammkrone 6 hinausragt. Zweck der Vorrichtung 1 ist es, das Spargelkraut 5 abzutrennen und aus dem Damm 3 herauszuziehen.

Die Vorrichtung 1 weist ein Messer 10 auf, welches als Balkenmesser realisiert ist. Dieses Messer 10 besitzt zwei gegeneinander verschiebbare Schneidklingen 11, die mit dreieckigen, geschliffenen Messerplatten 12 belegt sind. Durch eine in Bewegungsrichtung 13 ausgerichtete, oszillatorische Bewegung der beiden Schneidklingen 11 gegeneinander kommen die Messerplatten 12 gegeneinander mit unterschiedlichen Messerplatten 12 zur Deckung. Zwischen diesen Deckungsstellungen sitzen die Messerplatten 12 auf Lücke. Auf diese Weise ergeben sich zwischen den Messerplatten 12 entsprechende Scherungen, die das Spargelkraut 5 zuverlässig abtrennen. Das Messer 10 ist dabei unterhalb der Dammkrone 6 vorgesehen, um das Spargelkraut 5 in entsprechender Tiefe abzuschneiden.

Um zu verhindern, dass das Spargelkraut 5 dem Messer 10 ausweicht, ist ein Halter 20 vorgesehen, der bereits - in Fahrtrichtung 2 gesehen - vor dem Messer 10 das Spargelkraut 5 entgegen der Fahrtrichtung 2 umbiegt. Durch die elastischen Rückstellkräfte des Spargelkrauts 5 wird dieses durch den Halter 20 ausreichend sicher fixiert, so dass es vom Messer 10 zuverlässig und sauber abgeschnitten werden kann. Der Halter 20 wird von Ketten 21 gebildet, die durch Stäbe 22 miteinander verbunden sind. Grundsätzlich kann statt der Ketten 21 und der Stäbe 22 auch ein entsprechend breites Band vorgesehen sein. Es hat sich jedoch herausgestellt, dass die Stäbe 22 eine bessere Haltewirkung für das Spargelkraut 5 ergeben, weil das Spargelkraut 5 Freiräume zwischen den Stäben 22 teilweise durchdringt. Außerdem ist die Konstruktion mit Ketten 21 und Stäben 22 problemlos aus Metall, insbesondere Eisenmetall zu realisieren, was sich vorteilhaft auf die Robustheit der Vorrichtung 1 auswirkt. Die Ketten 21 werden über Kettenräder 23 umgelenkt. Diese Kettenräder 23 sind derart angeordnet, dass die Ketten 21 allmählich über dem Spargelkraut 5 abgesenkt werden. Dies erleichtert das sichere Erfassen des Spargelkrauts 5 erheblich.

Die Vorrichtung 1 weist außerdem einen Krautzieher 30 auf, der von weiteren Ketten 31 gebildet ist. Diese Ketten 31 werden über weitere Kettenräder 32 umgelenkt. Die Ketten 31 sind dabei derart angeordnet, dass das Spargelkraut 5 im Klemmgriff gehalten wird. Die Ketten 31 werden dabei derart angetrieben, dass deren Geschwindigkeit in Kettenrichtung 33 die Fahrgeschwindigkeit übersteigt. Zwischen den Ketten 31 ist das Spargelkraut 5 im Klemmgriff gehalten. Durch die beschriebene Geschwindigkeitsrelation wird damit erreicht, dass das Spargelkraut 5 entgegen der Fahrtrichtung 2 aus dem Damm 3 herausgezogen wird. Nachdem der Krautzieher 30 dem Messer 10 nachgeordnet ist, kann sicher ausgeschlossen werden, dass der Krautzieher 30 am noch nicht vom Messer 10 abgetrennten Spargelkraut 5 zieht, was die Spargelpflanze 4 schädigen könnte.

Sowohl der Halter 20 als auch der Krautzieher 30 sind nur in ihren vorderen Bereichen dargestellt, die für die Erfindung relevant sind. Es versteht sich von selbst, dass die Ketten 21, 31 endlos geschlossen sind und über weitere, nicht dargestellte Kettenräder umgelenkt werden.

Die Vorrichtung 1 weist außerdem einen Häcksler 40 auf, der von einer angetriebenen Häckslerwelle 41 und darauf drehfest angebrachten Häckslermessern 42 gebildet ist. Das Spargelkraut 5 wird diesem Häcksler 40 mit der Spitze voran zugeführt, wodurch ein Verstopfen eines nicht dargestellten Häckslereingangs zuverlässig vermieden wird. Der Häcksler 40 zerkleinert das Spargelkraut 5 und lässt die zerkleinerten Stücke auf den Damm 3 fallen. Diese dienen dann zur Gründdüngung der Spargelpflanze 4 für die nächste Wachstumsperiode.

Entgegen der dargestellten Ausführungsform des Häckslers 40 ist auch daran gedacht, die Häckslermesser 42 gelenkig mit der Häckslerwelle 41 zu verbinden. Auf diese Weise ergeben sich bewegliche Schlegel, die eine bessere Mulchwirkung ergeben. Außerdem können den Häckslermessern 42 stationäre Gegenmesser gegenüberliegen, was die Schnittwirkung der Häckslermesser 42 entsprechend verbessert. Ein nicht dargestelltes Häckslergehäuse kann ein Sieb enthalten, welches dafür sorgt, dass nur Teile bis zu einer bestimmten Maximalgröße den Häcksler 40 verlassen können.

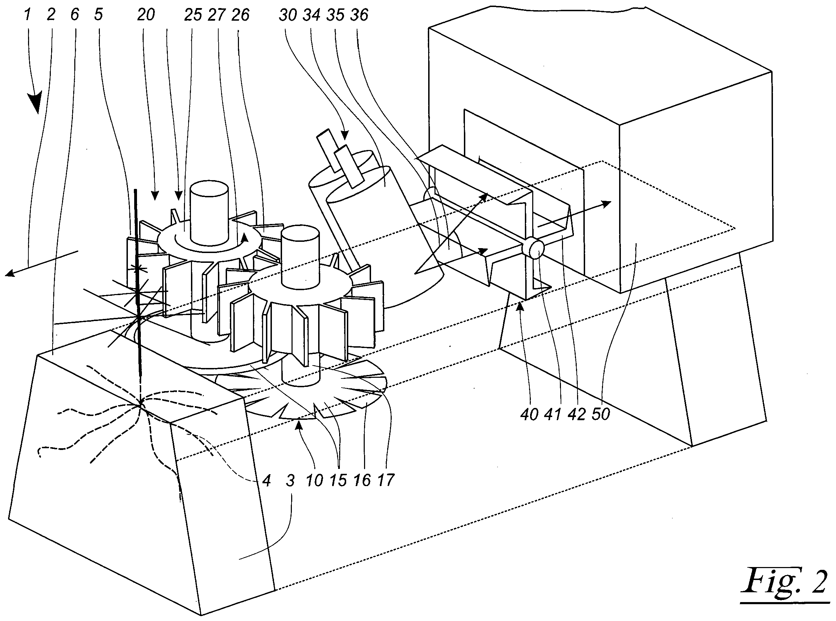

Die Figur 2 zeigt eine alternative Ausführungsform der Vorrichtung 1 gemäß Figur 1, wobei gleiche Bezugszeichen gleiche Teile benennen. Im Folgenden wird lediglich auf die Unterschiede zur Ausführungsform gemäß Figur 1 eingegangen.

Bei der Ausführungsform der Vorrichtung 1 gemäß Figur 2 wird das Messer 10 von zwei Kreismessern 15 gebildet. Diese sind gegenläufig zueinander zur Drehung angetrieben. Eines der Kreismesser 15 weist Zähne 16 auf, die zur Erhöhung der Scherkräfte zwischen den beiden Kreismessern 15 dienen. Beide Kreismesser 15 sind drehfest mit Messerwellen 17 verbunden, die mit einem nicht dargestellten Drehantrieb verbunden sind.

Der Halter 20 ist bei dieser Ausführungsform von zwei Trommeln 25 gebildet, die drehfest an der Messerwelle 17 befestigt sind. Damit ist die geometrische Zuordnung zwischen dem Halter 20 und dem Messer 10 exakt, so dass eine Gefahr des zu späten Haltens oder zu frühen Ziehens des Spargelkrauts 5 zuverlässig vermieden wird. An der Trommel 25 sind Greifer 26, vorzugsweise aus elastischem Material gehalten. Diese Greifer 26 sind entgegen einer Drehrichtung 27 der Trommeln 25 angestellt, um zwischen sich das Spargelkraut 5 locker zu erfassen und zu halten.

Dem Halter 20 ist der Krautzieher 30 nachgeordnet. Der Krautzieher 30 wird bei dieser Ausführungsform von zwei Trommeln 34 gebildet, die zur gegenläufigen Drehung angetrieben sind. Diese Trommeln 34 halten zwischen sich das Spargelkraut 5 im Klemmgriff und ziehen es aufgrund der Drehung der Trommeln 34 aus dem Damm 3 heraus. Die Trommeln 34 sind bei dieser Ausführungsform derart schräggestellt, dass eine Ziehkraft 35 auf das Spargelkraut 5 mit der Fahrtrichtung 2 einen spitzen Winkel 36 von vorzugsweise 45° einschließt. Daneben sind auch andere Winkel 36 möglich.

Dem Häcksler 40 ist ein Auffangkorb 50 nachgeordnet, der das klein gehäckselte Spargelkraut 5 auffängt, um es vom Damm 3 fernzuhalten. Das klein gehäckselte Spargelkraut 5 kann im Auffangkorb 50 gesammelt und beispielsweise einer Kompostiereinrichtung zugeführt werden.

Es versteht sich, dass die einzelnen Merkmale der dargestellten und beschriebenen Ausführungsformen in beliebiger Weise kombiniert werden können. So kann beispielsweise bei der Ausführungsform gemäß Figur 1 der Halter 20 in Form von Trommeln 25 ausgebildet sein, die beispielsweise auf den rotierenden Kreismessern 15 angeordnet sind. Der Krautzieher 30 gemäß Figur 1 kann entsprechend der Lehre gemäß Figur 2 auch in jedem beliebigen Winkel 36 zur Fahrtrichtung 2 angestellt werden, indem die Kette 31 entsprechend spitzwinkelig zur Fahrtrichtung 2 verkippt wird. Es ist beispielsweise auch denkbar, die Trommeln 34 des Krautziehers 30 gemäß Figur 2 horizontal oder vertikal anzustellen. Schließlich kann der Auffangkorb 50 gemäß Figur 2 auch entsprechend der Ausführungsform gemäß Figur 1 weggelassen werden kann. Alternativ kann der Auffangkorb 50 auch bei der Ausführungsform gemäß Figur 1 vorgesehen sein. Daneben sind beliebige weitere Kombinationen der Ausführungsbeispiele denkbar.

**Bezugszeichenliste**

| | | | |
|---|---|---|---|
| 1 | Vorrichtung | 50 | Auffangkorb |
| 2 | Fahrtrichtung | | |
| 3 | Damm | | |
| 4 | Spargelpflanze | | |
| 5 | Spargelkraut | | |
| 6 | Dammkrone | | |
| 10 | Messer | | |
| 11 | Schneidklinge | | |
| 12 | Messerplatte | | |
| 13 | Bewegungsrichtung | | |
| 15 | Kreismesser | | |
| 16 | Zahn | | |
| 17 | Messerwelle | | |
| 20 | Halter | | |
| 21 | Kette | | |
| 22 | Stab | | |
| 23 | Kettenrad | | |
| 25 | Trommel | | |
| 26 | Greifer | | |
| 27 | Drehrichtung | | |
| 30 | Krautzieher | | |
| 31 | Kette | | |
| 32 | Kettenrad | | |
| 33 | Kettenrichtung | | |
| 34 | Trommel | | |
| 35 | Ziehkraft | | |
| 36 | Winkel | | |
| 40 | Häcksler | | |
| 41 | Häckslerwelle | | |
| 42 | Häckslermesser | | |

## Patentansprüche

1. Vorrichtung zum Abschneiden von Spargelkraut (5) in einem Damm (3), wobei die Vorrichtung (1) in einer Fahrtrichtung (2) längs zum Damm (3) bewegbar ist, mindestens ein in den Damm (3) eindringendes Messer (10) und mindestens einen das vom mindestens einen Messer (10) abgeschnittene Spargelkraut (5) aus dem Damm (3) ziehenden Krautzieher (30) aufweist, **dadurch gekennzeichnet, dass** die Vorrichtung (1) mindestens einen das Spargelkraut (5) erfassenden Halter (20) aufweist, der dem mindestens einen Messer (10) vorgeordnet und der mindestens eine Krautzieher (30) dem mindestens einen Messer (10) nachgeordnet ist.

2. Vorrichtung nach dem Oberbegriff des Anspruchs 1, **dadurch gekennzeichnet, dass** der mindestens eine Halter (20) fest mit dem mindestens einen Messer (10) verbunden ist.

3. Vorrichtung nach Anspruch 1 oder 2, **dadurch gekennzeichnet, dass** der mindestens eine Halter (20) und/oder der mindestens eine Krautzieher (30) relativ zur Vorrichtung (1) angetrieben ist.

4. Vorrichtung nach mindestens einem der Ansprüche 1 bis 3, **dadurch gekennzeichnet, dass** der mindestens eine Halter (20) das Spargelkraut (5) derart locker erfasst, dass es relativ zum mindestens einen Halter (20) bewegbar ist.

5. Vorrichtung nach mindestens einem der Ansprüche 1 bis 4, **dadurch gekennzeichnet, dass** der mindestens eine Halter (20) das Spargelkraut (5) umbiegt.

6. Vorrichtung nach Anspruch 5, **dadurch gekennzeichnet, dass** der mindestens eine Halter (20) das Spargelkraut (5) entgegen der Fahrtrichtung (2) umbiegt.

7. Vorrichtung nach mindestens einem der Ansprüche 1 bis 6, **dadurch gekennzeichnet, dass** der mindestens eine Krautzieher (30) das Spargelkraut (5) im Klemmgriff erfasst.

8. Vorrichtung nach mindestens einem der Ansprüche 1 bis 7, **dadurch gekennzeichnet, dass** der mindestens eine Krautzieher (30) das Spargelkraut (5) im spitzen Winkel (36) zur Fahrtrichtung (2) nach oben zieht.

9. Vorrichtung nach mindestens einem der Ansprüche 1 bis 8, **dadurch gekennzeichnet, dass** das mindestens eine Messer (10) von rotierend angetriebenen Kreismessern (15) gebildet ist.

10. Vorrichtung nach Anspruch 9, **dadurch gekennzeichnet, dass** das mindestens eine Kreismesser (15) gezahnt ist.

11. Vorrichtung nach Anspruch 9 oder 10, **dadurch gekennzeichnet, dass** an den Kreismessern (15) Trommeln (25) drehfest gehalten sind, welche den mindestens einen Halter (20) und/oder den mindestens einen Krautzieher (30) bilden.

12. Vorrichtung nach mindestens einem der Ansprüche 1 bis 11, **dadurch gekennzeichnet, dass** dem mindestens einen Messer (10) mindestens ein Häcksler (40) nachgeordnet ist.

13. Vorrichtung nach Anspruch 12, **dadurch gekennzeichnet, dass** dem mindestens einen Häcksler (40) mindestens ein Auffangkorb (50) nachgeordnet ist.

## Claims

1. Device for cutting off asparagus fern (5) in a ridge (3), wherein the device (1) is movable in a direction of travel (2) along the ridge (3), has at least one cutter (10) that penetrates into the ridge (3), and has at least one fern puller (30) that pulls the asparagus fern (5) cut off by the at least one cutter (10) out of the ridge (3), **characterized in that** the device (1) has at least one holder (20) that takes hold of the asparagus fern (5), said holder (20) being arranged upstream of the at least one cutter (10), and the at least one fern puller (30) is arranged downstream of the at least one cutter (10).

2. Device according to the preamble of Claim 1, **characterized in that** the at least one holder (20) is securely connected to the at least one cutter (10).

3. Device according to Claim 1 or 2, **characterized in that** the at least one holder (20) and/or the at least one fern puller (30) is driven relative to the device (1).

4. Device according to at least one of Claims 1 to 3, **characterized in that** the at least one holder (20) takes hold of the asparagus fern (5) loosely such that it is movable relative to the at least one holder (20).

5. Device according to at least one of Claims 1 to 4, **characterized in that** the at least one holder (20) bends the asparagus fern (5).

6. Device according to Claim 5, **characterized in that** the at least one holder (20) bends the asparagus fern (5) counter to the direction of travel (2).

7. Device according to at least one of Claims 1 to 6, **characterized in that** the at least one fern puller (30) takes hold of the asparagus fern (5) tightly.

8. Device according to at least one of Claims 1 to 7, **characterized in that** the at least one fern puller (30) pulls the asparagus fern (5) upwards at an acute angle (36) to the direction of travel (2).

9. Device according to at least one of Claims 1 to 8, **characterized in that** the at least one cutter (10) is formed by circular cutters (15) that are driven in rotation.

10. Device according to Claim 9, **characterized in that** the at least one circular cutter (15) is serrated.

11. Device according to Claim 9 or 10, **characterized in that** drums (25) are held on the circular cutters (15) so as to rotate therewith, said drums forming the at least one holder (20) and/or the at least one fern puller (30).

12. Device according to at least one of Claims 1 to 11, **characterized in that** at least one chopper (40) is arranged downstream of the at least one cutter (10).

13. Device according to Claim 12, **characterized in that** at least one collecting basket (50) is arranged downstream of the at least one chopper (40).

## Revendications

1. Dispositif de séparation de fanes (5) dans un remblai (3), le dispositif (1) pouvant être déplacé dans une direction de conduite (2) le long du remblai (3), présentant au moins un couteau (10) pénétrant dans le remblai (3) et au moins un dispositif de traction de fanes (30) titrant hors du remblai (3) les fanes (5) coupées par l'au moins un couteau (10),
**caractérisé en ce que** le dispositif (1) présente au moins un dispositif de retenue (20) saisissant la fane (5), qui est placé avant l'au moins un couteau (10) et l'au moins un dispositif de traction de fanes (30) est placé après l'au moins un couteau (10).

2. Dispositif selon le préambule de la revendication 1, **caractérisé en ce que** l'au moins un dispositif de retenue (20) est raccordé fixement à l'au moins un couteau (10).

3. Dispositif selon la revendication 1 ou 2, **caractérisé en ce que** l'au moins un dispositif de retenue (20) et/ou l'au moins un dispositif de traction de fanes (30) sont entraînés par rapport au dispositif (1).

4. Dispositif selon au moins l'une quelconque des revendications 1 à 3, **caractérisé en ce que** l'au moins un dispositif de retenue (20) saisit la fane (5) de manière lâche de telle sorte qu'elle puisse être déplacée par rapport à l'au moins un dispositif de retenue (20).

5. Dispositif selon au moins l'une quelconque des revendications 1 à 4, **caractérisé en ce que** l'au moins un dispositif de retenue (20) recourbe la fane (5).

6. Dispositif selon la revendication 5, **caractérisé en ce que** l'au moins un dispositif de retenue (20) recourbe la fane (5) dans le sens opposé à la direction de conduite (2).

7. Dispositif selon au moins l'une quelconque des revendications 1 à 6, **caractérisé en ce que** l'au moins un dispositif de traction de fanes (30) saisit la fane (5) en la serrant.

8. Dispositif selon au moins l'une quelconque des revendications 1 à 7, **caractérisé en ce que** l'au moins un dispositif de traction de fanes (30) tire vers le haut la fane (5) suivant un angle aigu (36) par rapport à la direction de conduite (2).

9. Dispositif selon au moins l'une quelconque des revendications 1 à 8, **caractérisé en ce que** l'au moins un couteau (10) est formé par des couteaux circulaires entraînés en rotation (15).

10. Dispositif selon la revendication 9, **caractérisé en ce que** l'au moins un couteau circulaire (15) est denté.

11. Dispositif selon la revendication 9 ou 10, **caractérisé en ce que** des tambours (25) sont retenus de manière solitaire en rotation sur les couteaux circulaires (15), lesquels forment l'au moins un dispositif de retenue (20) et/ou l'au moins un dispositif de traction de fanes (30).

12. Dispositif selon au moins l'une quelconque des revendications 1 à 11, **caractérisé en ce qu'**une défectueuse (40) est placée en aval de l'au moins un couteau (10).

13. Dispositif selon la revendication 12, **caractérisé en ce qu'**au moins un panier de collecte (50) est placé en aval de l'au moins une déchiqueteuse (40).
